# EUROPÄISCHE PATENTSCHRIFT

(11) **EP 0 931 214 B1**
(45) Veröffentlichungstag und Bekanntmachung des Hinweises auf die Patenterteilung: **24.07.2002**
(21) Anmeldenummer: 97909196.4
(22) Anmeldetag: 25.09.1997
(51) Int. Cl.: F02M 31/04, F02C 7/047, F01D 25/02, G05D 23/30

(54) **VERFAHREN ZUR TEMPERATURREGELUNG VON ANSAUGLUFT, TEMPERATURREGELEINRICHTUNG ZUR DURCHFÜHRUNG DES VERFAHRENS UND EINE GASTURBINE**
METHOD FOR THERMOREGULATING INLET AIR, AND THERMOSTAT NEEDED FOR ITS APPLICATION
TECHNIQUE DE THERMOREGULATION D'AIR ASPIRE, ET THERMOREGULATEUR REQUIS POUR SON APPLICATION

(30) Priorität: 08.10.1996 DE 19641434
(43) Veröffentlichungstag der Anmeldung: 28.07.1999
(73) Patentinhaber: SIEMENS AKTIENGESELLSCHAFT, 80333 München (DE)
(72) Erfinder: BÄHR, Siegfried, D-91330 Eggolsheim (DE); PFUFF, Thomas, D-90607 Rückersdorf (DE)
(86) Internationale Anmeldenummer: DE9702188
(87) Internationale Veröffentlichungsnummer: WO9815732

(56) Entgegenhaltungen:
- DE-A- 2 619 600
- DE-A- 3 903 234
- US-A- 3 210 058
- US-A- 3 584 785
- US-A- 4 747 748

## Beschreibung

Die Erfindung betrifft ein Verfahren zur Regelung der Temperatur von Ansaugluft, die aus Außenluft über ein Luftzufuhrsystem bereitgestellt wird. Sie bezieht sich weiter auf eine Temperaturregeleinrichtung zur Durchführung des Verfahrens.

Bei einer Vielzahl technischer Anlagen, insbesondere bei Verbrennungsmaschinen oder Kompressoren, kann eine Luftzufuhr für den Betrieb erforderlich sein. Dazu ist üblicherweise ein Luftzufuhrsystem vorgesehen, das aus Außenluft gewonnene Ansaugluft bereitstellt. Ein derartiges Luftzufuhrsystem kann beispielsweise eine Anzahl von Ansaugelementen und zudem Filtereinrichtungen umfassen (siehe z.B. US-A-4747748).

Auch bei einer Gasturbine ist die Zufuhr von Ansaugluft zu dem ihrer Brennkammer vorgeschalteten Verdichter erforderlich. Dazu ist dem Verdichter üblicherweise ebenfalls ein derartiges Luftzufuhrsystem vorgeschaltet. Die durch das Luftzufuhrsystem angesaugte Luft wird beim Durchströmen des Luftzufuhrsystems in der Regel beschleunigt. Diese Beschleunigung kann dabei einerseits lokal während der Umströmung oder Durchströmung eines Hindernisses, beispielsweise eines Vogelschutzgitters oder eines Filters, erfolgen. Andererseits resultiert aber auch aus einer Einengung des Strömungsquerschnitts entlang des Durchströmungsweges im Luftzufuhrsystem eine näherungsweise adiabatische Beschleunigung der angesaugten Luft. Diese adiabatische Beschleunigung der angesaugten Luft ist mit einer Enthalpieerniedrigung verbunden. Die Enthalpieerniedrigung wiederum bewirkt eine Temperaturabsenkung in der angesaugten Luft. Bei einer Beschleunigung der angesaugten Luft auf eine Geschwindigkeit von etwa 100m/s, die üblicherweise am Eintritt des Verdichters der Gasturbine vorliegt, ergibt sich beispielsweise rechnerisch eine Abkühlung der angesaugten Luft um etwa 5° C. In Abhängigkeit vom Zustand der Außenluft, insbesondere von deren Druck und Temperatur, kann dabei eine Eisbildung erfolgen. Diese Eisbildung kann zu einer Leistungsminderung der Gasturbine, zu Betriebsstörungen oder gar zu einer Beschädigung der Gasturbine führen und ist daher zu vermeiden.

Zur Vermeidung der Eisbildung in der vom Luftzufuhrsystem der Gasturbine bereitgestellten Ansaugluft ist eine Aufwärmung der Ansaugluft vor ihrem Eintritt in den Verdichter der Gasturbine oder am Eintritt des Luftzufuhrsystems üblich. Dabei kommen herkömmlicherweise Heizsysteme oder "Anti-Icing-Systeme" zum Einsatz. Bei einem solchen Heizsystem kann eine Aufheizung der Ansaugluft mit verschiedenen Verfahren erfolgen, wie beispielsweise Einspeisen von rückgeführter Verdichterheißluft, mittels eines dampfbeheizten Wärmetauschers oder auch mittels einer elektrischen Beheizung. Analoge Systeme zur Verhinderung von Eisbildung in der von einem Luftzufuhrsystem bereitgestellten Ansaugluft können auch in anderen technischen Anlagen, wie beispielsweise in Verbrennungsmaschinen oder Kompressoren, zum Einsatz kommen.

Der Einsatz eines Heizsystems hat jedoch einen Verbrauch von Wärmeenergie zur Folge, die dann der Gasturbine bzw. der technischen Anlage nicht mehr zur Verfügung steht. Somit ist der Wirkungsgrad der Gasturbine bzw. der technischen Anlage durch den Einsatz eines derartigen Heizsystems herabgesetzt.

Der Erfindung liegt daher die Aufgabe zugrunde, ein Verfahren zur Temperaturregelung von aus Außenluft über ein Luftzufuhrsystem bereitgestellter Ansaugluft anzugeben, mit dem eine Eisbildung in der Ansaugluft bei einem besonders geringen Energieverbrauch sicher und zuverlässig vermieden ist. Weiterhin soll eine zur Durchführung eines derartigen Verfahrens besonders geeignete Temperaturregeleinrichtung angegeben werden.

Bezüglich des Verfahrens der obengenannten Art wird diese Aufgabe erfindungsgemäß gelöst, indem für die Ansaugluft ein durch die Summe aus dem Taupunkt der Außenluft und aus einem additiven Sicherheitsaufschlag gebildeter Temperatur-Sollwert vorgegeben wird. Die Temperatur der Ansaugluft wird dabei diesem Sollwert, beispielsweise durch Beheizung der Ansaugluft, nachgeführt.

Dabei ist der "Taupunkt" eines Gemisches aus Wasserdampf und Luft bei vorgegebenem Druck definiert als diejenige Temperatur, bei deren Unterschreitung eine Ausscheidung von Wasser oder Eis infolge von Kondensation oder Desublimation einsetzt.

Die Erfindung geht von der Überlegung aus, daß die zur Vermeidung der Eisbildung bereitzustellende Wärmeenergie besonders gering gehalten werden kann, indem für die Beheizung der Ansaugluft ein besonders niedriger Temperatur-Sollwert vorgegeben wird. Ein besonders niedriger Temperatur-Sollwert, der zudem sicher und zuverlässig eine Eisbildung in der Ansaugluft ausschließt, ist dabei im wesentlichen durch den Taupunkt gegeben, da bei einer Überschreitung des Taupunkts durch die Temperatur der Ansaugluft eine Eisbildung aus physikalischen Gründen nicht stattfinden kann.

Um die zur Verhinderung der Eisbildung erforderliche, zur Aufheizung der Ansaugluft bereitzustellende Wärmemenge ganz besonders gering zu halten, wird vorteilhafterweise dann, wenn der Taupunkt größer als 0°C ist, als Temperatur-Sollwert die Summe aus 0°C und aus dem Sicherheitsaufschlag vorgegeben. Dabei liegt die Erkenntnis zugrunde, daß auch eine zweite physikalische Randbedingung zur Eisbildung erforderlich ist, daß nämlich zur Eisbildung unabhängig vom Taupunkt der Ansaugluft deren Temperatur unterhalb von 0°C liegen muß. Bei einer Temperatur der Ansaugluft von mehr als 0°C ist somit für eine sichere Vermeidung der Eisbildung eine Beheizung nicht erforderlich.

Zur sicheren Vermeidung der Eisbildung orientiert sich der Temperatur-Sollwert am Taupunkt der Außenluft; er übersteigt diesen um den vorgegebenen additiven Sicherheitsaufschlag. Wie sich herausgestellt hat, ist die Eisbildung dann zuverlässig vermieden, wenn ein Sicherheitsaufschlag von mindestens 0°C und höchstens 0,5°C gewählt wird.

Der bei der Bildung des Temperatur-Sollwerts zugrundegelegte Taupunkt der Außenluft kann auf verschiedene Weise ermittelt werden. Vorzugsweise wird der Taupunkt dabei direkt ermittelt oder gemessen.

In alternativer zweckmäßiger Weise kann der Taupunkt aber auch anhand der absoluten Feuchtigkeit der Außenluft oder aber anhand der Temperatur und der relativen Feuchtigkeit der Außenluft ermittelt werden. Dabei wird zur Ermittlung des Taupunktes zweckmäßigerweise ein Kennlinienfeld zugrundegelegt, das den physikalischen Zusammenhang zwischen dem Taupunkt und den jeweils zugrundegelegten Parametern repräsentiert. Dabei wird zweckmäßigerweise dann kein Regeleingriff auf die Ansaugluft vorgenommen, wenn die Temperatur der Außenluft weniger als -5°C oder mehr als 5°C beträgt, oder wenn die relative Feuchtigkeit der Außenluft geringer ist als 80%. Dabei liegt die Erkenntnis zugrunde, daß als physikalische Randbedingung zur Eisbildung in der Ansaugluft die Außenluft eine Temperatur von mindestens -5°C und höchstens 5°C und eine relative Feuchtigkeit von mindestens 80% aufweisen muß.

Der Taupunkt der Außenluft ist abhängig von deren Druck. Bei einem auch bei Luftdruckschwankungen der Außenluft besonders zuverlässigen Verfahren wird daher zusätzlich der Luftdruck der Außenluft ermittelt und bei der Ermittlung des Taupunktes zusätzlich zugrundegelegt. Dies kann beispielsweise anhand eines dafür vorgesehenen Kennlinienfeldes erfolgen. Dabei kann auch die Auswirkung der geodätischen Höhe auf den Luftdruck der Außenluft berücksichtigt sein.

Bezüglich der für die Durchführung dieses Verfahrens besonders geeigneten Temperaturregeleinrichtung für von einem Luftzufuhrsystem aus Außenluft bereitgestellter Ansaugluft wird die genannte Aufgabe erfindungsgemäß gelöst, indem ein Regler vorgesehen ist, an den eingangsseitig ein Meßsystem zur Ermittlung des Taupunktes der Außenluft angeschlossen ist, und der zur Einstellung der Temperatur der Ansaugluft mit einem Temperatur-Sollwert beaufschlagt ist, der durch die Summe aus dem Taupunkt der Außenluft und aus einem additiven Sicherheitsaufschlag gebildet ist. Ausgangsseitig wirkt der Regler auf das zur Aufheizung der Außenluft vorgesehene Heizsystem. Das Heizsystem kann dabei dem Verdichter der Gasturbine oder auch dem Luftzufuhrsystem vorgeschaltet sein.

Der Regler erhält dabei vorteilhafterweise bei einer Summe aus dem Taupunkt und aus dem Sicherheitsaufschlag von mehr als 0K einen Temperatur-Sollwert von 0° C. Dabei beträgt der Sicherheitsaufschlag zweckmäßigerweise mindestens 0°C und höchstens 0,5°C.

In vorteilhafter Weiterbildung ist an das Meßsystem eingangsseitig ein Fühler zur direkten Ermittlung des Taupunktes der Außenluft angeschlossen.

In alternativer zweckmäßiger Weiterbildung ist an das Meßsystem eingangsseitig ein Feuchtigkeitsfühler zur Ermittlung der absoluten Feuchtigkeit der Außenluft angeschlossen. In weiterer alternativer zweckmäßiger Ausgestaltung sind an das Meßsystem eingangsseitig ein Temperaturfühler zur Ermittlung der Temperatur der Außenluft und ein Feuchtigkeitsfühler zur Ermittlung der relativen Feuchtigkeit der Außenluft angeschlossen. In diesen Fällen ist im Meßsystem vorteilhafterweise ein Kennlinienfeld zur Bestimmung des Taupunkts der Außenluft hinterlegt.

Weiterhin ist der Regler dabei vorteilhafterweise derart ausgebildet, daß er bei einer Temperatur der Außenluft von weniger als -5°C oder von mehr als 5°C oder bei einer relativen Feuchtigkeit der Außenluft von weniger als 80% keinen Regelungseingriff auf die Ansaugluft vornimmt.

In weiterer vorteilhafter Weiterbildung ist an das Meßsystem eingangsseitig ein Druckfühler zur Ermittlung des Luftdrucks der Außenluft angeschlossen.

Vorteilhafterweise kommt die Temperaturregeleinrichtung bei einer Gasturbinenanlage zum Einsatz. Dazu ist einem der Brennkammer der Gasturbine vorgeschalteten Verdichter lufteingangsseitig eine derartige Temperaturregeleinrichtung zugeordnet.

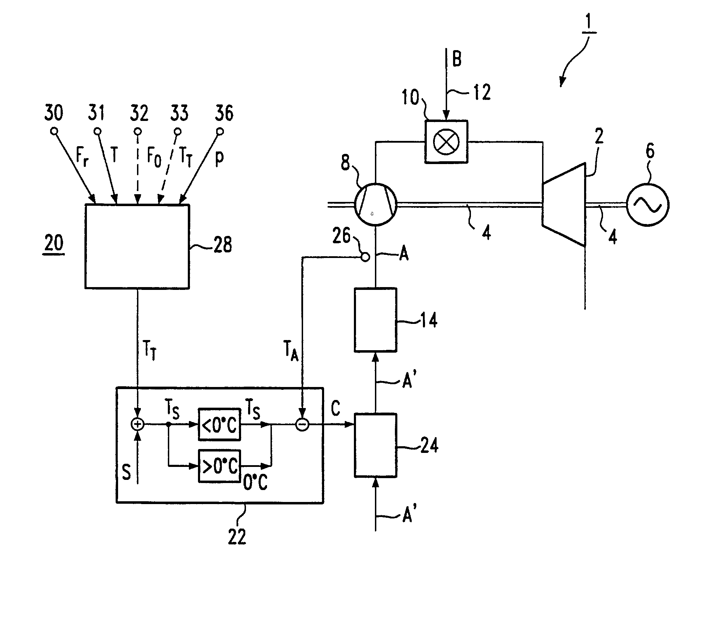

Ausführungsbeispiele der Erfindung werden anhand einer Zeichnung näher erläutert. Darin zeigt die Figur schematisch eine Gasturbinenanlage mit einer Temperaturregeleinrichtung.

Die Gasturbine 1 gemäß der Figur umfaßt einen Turbinenteil 2, an dessen Turbinenwelle 4 einerseits ein Generator 6 und andererseits ein Verdichter 8 angeordnet sind. Der Verdichter 8 ist ausgangsseitig mit einer Brennkammer 10 verbunden, die ihrerseits ausgangsseitig an den Turbinenteil 2 angeschlossen ist. Der Brennkammer 10 wird im Betrieb ein Brennstoff B, wie Gas, über ein Zuleitungssystem 12 zugeführt.

Zur Zuführung von Ansaugluft A ist dem Verdichter 8 ein Luftzufuhrsystem 14 vorgeschaltet. Das Luftzufuhrsystem 14 wird im Betrieb eingangsseitig mit Außenluft A' aus der Umgebung der Gasturbine 1 beaufschlagt. Bei dem Luftzufuhrsystem 14 handelt es sich um ein nicht näher dargestelltes Rohrleitungssystem oder Kanalsystem mit einer Anzahl von Ansaugelementen und Filtereinrichtungen. Im Luftzufuhrsystem 14 können auch in nicht näher dargestellter Weise eine Anzahl von Schalldämpferelementen angeordnet sein.

Beim Durchströmen des Luftzufuhrsystems 14 wird die Außenluft A' beschleunigt, bevor sie als Ansaugluft A in den Verdichter 8 gelangt. Diese Beschleunigung ist näherungsweise adiabatisch und somit mit einer Temperaturabsenkung der Ansaugluft A gegenüber der einströmenden Außenluft A' verbunden. Um auch bei ungünstigen Bedingungen für die Außenluft A' eine Eisbildung in der Ansaugluft A und eine daraus möglicherweise resultierende Beschädigung der Gasturbine 1 oder des Luftzufuhrsystems 14 sicher zu vermeiden, weist die Gasturbine 1 eine Temperaturregeleinrichtung 20 auf.

Die Temperaturregeleinrichtung 20 umfaßt einen Regler 22, der ausgangsseitig an eine Heizeinrichtung 24 für die in das Luftzufuhrsystem 14 einströmende Außenluft A' angeschlossen ist. Die Heizeinrichtung 24 ist dem Luftzufuhrsystem 14 vorgeschaltet. Eingangsseitig ist der Regler 22 an einen Temperaturfühler 26 zur Messung der Temperatur T_{A} der dem Verdichter 8 zuströmenden Ansaugluft A angeschlossen. Der Temperaturfühler 26 ist dabei vorteilhafterweise zwischen dem Austritt des Luftzufuhrsystems 14 und dem Eintritt des Verdichters 8 angeordnet, da an dieser Stelle die zu erwartende adiabatische Beschleunigung der Ansaugluft A maximal ist.

Weiterhin ist der Regler 22 eingangsseitig mit einem Meßsystem 28 verbunden. Das Meßsystem 28 ist eingangsseitig an einer Anzahl von Meßfühlern 30, 31 zur Ermittlung von für die Außenluft A' charakteristischen Parametern angeschlossen. Es ist zur Übermittlung eines den Taupunkt der Außentemperatur der Außenluft A' charakterisierenden Meßwertes T_{T} an den Regler 22 bestimmt. An das Meßsystem 28 ist bevorzugt noch ein Druckmesser 36 angeschlossen.

Beim Betrieb der Gasturbine 1 bildet der Regler 22 aus dem vom Meßsystem 28 übermittelten Meßwert T_{T} für den Taupunkt der Ansaugluft A und einem vorgebbaren Sicherheitsaufschlag S einen Temperatur-Sollwert T_{S} nach der Beziehung T_{S} = T_{T} + S. In Abhängigkeit von der Differenz zwischen diesem Temperatur-Sollwert T_{S} und der Temperatur T_{A} der Ansaugluft A übermittelt der Regler 22 einen Stellwert C für das Heizsystem 24. Das Heizsystem 24, das in der Figur in der Art eines Wärmetauschers dargestellt ist, kann dabei beliebig ausgeführt sein. Insbesondere kann es sich um ein Einspeisesystem für rückführbare Verdichterheißluft, um einen dampfbeheizten Wärmetauscher oder um eine elektrische Beheizungsvorrichtung handeln. Je nach Art des Heizsystems 24 ist dabei ein angepaßter, vom Regler 22 übermittelter Stellwert C vorgesehen. Beispielsweise kann es sich um einen Heizstrom, um eine Ventilstellung oder auch um einen anderen geeigneten Stellwert C handeln.

Der Regler 22 nimmt mittels des Heizsystems 24 solange eine Beheizung der in das Luftzufuhrsystem 14 einströmenden Außenluft A' vor, bis die Temperatur T_{A} der Ansaugluft innerhalb einer vorgebbaren Toleranz mit dem vom Regler 22 vorgegebenen Temperatur-Sollwert T_{S} übereinstimmt.

Der Regler 22 gibt dabei als Temperatur-Sollwert T_{S} entweder die Summe aus dem Taupunkt T_{T} der Außenluft A' und aus dem vorgegebenen Sicherheitsaufschlag S vor, falls der Taupunkt T_{T} kleiner als 0°C ist. Falls der Taupunkt T_{T} größer oder gleich 0°C ist, gibt der Regler 22 statt dessen einen Temperatur-Sollwert T_{S} vor, der aus der Summe von 0°C und dem Sicherheitsaufschlag S gebildet ist. von 0°C vor. Als Sicherheitsaufschlag S ist dabei ein Wert von mindestens 0°C und höchstens 0,5°C vorgesehen.

Der vom Meßsystem 28 an den Regler 22 übergebene Meßwert T_{T} des Taupunktes wird dabei im Meßsystem 28 anhand von Meßwerten ermittelt, die von Meßfühlern 30, 31 geliefert werden und die die Außenluft A' charakterisieren. Im Ausführungsbeispiel ist als erster Meßfühler 30 ein Feuchtigkeitsfühler zur Ermittlung der relativen Feuchtigkeit Fr der Außenluft A' vorgesehen. Der Meßwert für die relative Feuchtigkeit Fr wird dabei vom Meßsystem 28 ebenfalls an den Regler 22 weitergeleitet. Als zweiter Meßfühler 31 ist ein Temperaturfühler zur Ermittlung der Temperatur T der Außenluft A' vorgesehen. Alternativ oder zusätzlich kann als Sensor, aber auch ein Feuchtigkeitsfühler 32 zur Ermittlung der absoluten Feuchtigkeit Fₐ der Außenluft A' oder ein Fühler 33 zur direkten Ermittlung des Taupunktes T_{T} der Außenluft A' vorgesehen sein.

Der Regler 22 ist weiter derart konzipiert (was nicht gezeigt ist), daß er lediglich bei einer relativen Feuchtigkeit Fᵣ der Außenluft A' von mehr als 80 % den Temperatur-Sollwert T_{S} für die Ansaugluft A vorgibt. Bei einer relativen Feuchtigkeit Fᵣ der Außenluft A' von weniger als 80 % nimmt der Regler 22 hingegen keinen Regelungseingriff auf die angesaugte Außenluft A' vor.

Ebenso ist der Regler 22 in nicht näher dargestellter Weise derart konzipiert, daß er lediglich bei einer Temperatur T der Außenluft A' von mindestens -5°C und höchstens 5°C den Temperatur-Sollwert T_{S} für die Ansaugluft A vorgibt. Bei einer Temperatur T der Außenluft A' von weniger als -5°C oder von mehr als 5°C nimmt der Regler 22 hingegen keinen Regelungseingriff auf die angesagte Außenluft A' vor. Zur Ermittlung des Meßwerts T_{T} für den Taupunkt der Außenluft A' aus ihrer Temperatur T und ihrer relativen Feuchtigkeit Fᵣ ist im Meßsystem 28 ein Kennlinienfeld hinterlegt. Dieses Kennlinienfeld repräsentiert den physikalischen Zusammenhang zwischen dem Taupunkt, der Temperatur und der relativen Feuchtigkeit von Luft. In der beigefügten Tabelle sind beispielhaft Eckwerte für die Aufstellung eines derartigen Kennlinienfeldes angeführt.

**Tabelle 1**

| | **Taupunkte in °C** | | | **Solltemperaturen am Verdichtereintritt in °C** | | |
|---|---|---|---|---|---|---|
| rel. Feuchte der Außenluft in % → ↓ Außenlufttemperatur in °C ↓ | 100 | 90 | 80 | 100 | 90 | 80 |
| +5 | +5 | +3,3 | +1,7 | 0 | 0 | 0 |
| +4 | +4 | +2,3 | +0,8 | 0 | 0 | 0 |
| +3 | +3 | +1,6 | | | 0 | 0 |
| +2 | +2 | +0,5 | -1 | 0 | 0 | -1 |
| +1 | +1 | -0,3 | -2,1 | 0 | -0,3 | -2,1 |
| 0 | 0 | -1,4 | -3 | 0 | -1,4 | -3 |
| -1 | -1 | -2,4 | -4 | -1 | -2,4 | -4 |
| -2 | -2 | -3,5 | -5 | -2 | -3,5 | -5 |
| -3 | -3 | -4,3 | -6 | -3 | -4,3 | -6 |
| -4 | -4 | -5,4 | -7 | -4 | -5,4 | -7 |
| -5 | -5 | -6,5 | -8 | -5 | -6,5 | -8 |

Zum Erhalt von Zwischenwerten zwischen den angegebenen Eckwerten ist in geeigneter Weise zu interpolieren. Da der Regler 22 derart ausgebildet ist, daß er bei einer relativen Feuchtigkeit Fᵣ der Außenluft A' von weniger als 80° oder bei einer Temperatur T der Außenluft A' von weniger als -5°C oder von mehr als 5°C keinen Regelungseingriff auf die angesaugte Außenluft A' vornimmt, ist das Kennlinienfeld entsprechend beschränkt. Der zur Hinterlegung des Kennlinienfeldes im Meßsystem benötigte Speicherplatz ist somit besonders gering.

Bei der alternativ vorgesehenen Messung der absoluten Feuchtigkeit Fₒ der Außenluft A' mittels des Sensors 32 anstelle ihrer Temperatur T und ihrer relativen Feuchtigkeit Fᵣ kann über eine einzige Kennlinie oder über eine mathematische Funktion direkt auf den Meßwert T_{T} für den Taupunkt geschlossen werden. Im Meßsystem 28 ist in diesem Fall anstelle des Kennlinienfeldes eine mathematische Funktion oder eine Kennlinie hinterlegt. In diesem Fall ist vorgesehen, das der Regler 22 bei einer absoluten Feuchtigkeit der Außenluft A' von weniger als etwa 2 g Wasserdampf pro kg Luft keinen Regelungseingriff auf die angesaugte Außenluft A' vornimmt. Damit ist dem Erfahrungswert Rechnung getragen, daß unterhalb dieses Grenzwertes im allgemeinen keine Vereisung auftritt, da dann die Luft zu trocken ist. Bei einer absoluten Feuchtigkeit der Außenluft A' von mehr als etwa 3,8 g Wasserdampf pro kg Luft ist vorgesehen, das der Regler 22 den Temperatur-Sollwert T_{S} für die Ansaugluft A auf die Summe von 0°C und dem Sicherheitsaufschlag S setzt, da der Taupunkt der Außenluft A' dann über 0°C liegt.

Bei der ebenfalls alternativ vorgesehenen direkten Messung des Taupunktes T_{T} der Außenluft A' mittels des Fühlers 33 ist vorgesehen, daß der Regler 22 bei einem Taupunkt von weniger als etwa -8 °C keinen Regelungseingriff auf die angesaugte Außenluft A' vornimmt. Dies entspricht wiederum dem Fall, daß keine Vereisung der Ansaugluft A auftreten kann, da Luft in einem derartigen Zustand für eine Vereisung zu trocken ist. Bei einem gemessenen Taupunkt von mehr als 0°C hingegen setzt der Regler 22 die Solltemperatur T_{S} für die Ansaugluft A auf die Summe von 0°C und dem Sicherheitsaufschlag S.

Zur Kompensation von Druckschwankungen der Außenluft A' ist an das Meßsystem 28 der erwähnte Drucksensor 36 angeschlossen. Anhand des Meßwerts für den Druck p der Außenluft A', den dieser Drucksensor 32 an das Meßsystem 28 übermittelt, und anhand eines zusätzlichen im Meßsystem 28 hinterlegten Kennlinienfeldes wird gegebenenfalls eine Korrektur des Meßwertes T_{T} für den Taupunkt der Außenluft A' vorgenommen.

Aufgrund der beschriebenen Arbeitsweisen der Temperaturregeleinrichtung 20 ist eine Eisbildung in der Ansaugluft A sicher und zuverlässig vermieden, wobei gleichzeitig die dazu erforderliche, in das Heizsystem 24 einzuspeisende Wärmemenge besonders gering ist. Somit ist ein zuverlässiger und sicherer Betrieb der Gasturbine 1 bei nur geringem Wirkungsgradverlust gewährleistet.

## Patentansprüche

1. Verfahren zur Temperaturregelung von aus Außenluft (A') über ein Luftzufuhrsystem (14) bereitgestellter Ansaugluft (A), bei dem für die Ansaugluft (A) ein durch die Summe aus dem Taupunkt (T_{T}) der Außenluft (A') und aus einem additiven Sicherheitsaufschlag (S) gebildeter Temperatur-Sollwert (T_{S}) vorgegeben wird.

2. Verfahren nach Anspruch 1, bei dem im Falle, daß der Taupunkt (T_{T}) mehr als 0° C beträgt, ein durch die Summe von 0°C und dem Sicherheitsaufschlag (S) gebildeter Temperatur-Sollwert (T_{S}) vorgegeben wird.

3. Verfahren nach Anspruch 1 oder 2, bei dem ein Sicherheitsaufschlag (S) von mindestens 0°C und höchstens 0,5°C gewählt wird.

4. Verfahren nach einem der Ansprüche 1 bis 3, bei dem der Taupunkt (T_{T}) anhand der Temperatur (T) der Außenluft (A') und anhand der relativen Feuchtigkeit (Fᵣ) der Außenluft (A') ermittelt wird.

5. Verfahren nach Anspruch 4, bei dem bei einer relativen Feuchtigkeit (Fᵣ) der Außenluft (A') von mindestens 80 % der Temperatur-Sollwert (T_{S}) vorgegeben wird, und bei dem bei einer relativen Feuchtigkeit (Fᵣ) der Außenluft (A') von weniger als 80 % kein Regelungseingriff auf die Ansaugluft (A) vorgenommen wird.

6. Verfahren nach Anspruch 4, bei dem bei einer Temperatur (T) der Außenluft (A') von mindestens -5°C und höchstens 5°C der Temperatur-Sollwert (T_{S}) vorgegeben wird, und bei dem bei einer Temperatur (T) der Außenluft (A') von weniger als -5°C oder von mehr als 5°C kein Regelungseingriff auf die Ansaugluft (A) vorgenommen wird.

7. Verfahren nach einem der Ansprüche 1 bis 3, bei dem der Taupunkt (T_{T}) anhand der absoluten Feuchtigkeit der Außenluft (A') ermittelt wird.

8. Verfahren nach einem der Ansprüche 1 bis 7, bei dem der Taupunkt (T_{T}) anhand eines Kennlinienfeldes ermittelt wird.

9. Verfahren nach einem der Ansprüche 1 bis 3, bei dem der Taupunkt (T_{T}) der Außenluft (A') direkt ermittelt wird.

10. Verfahren nach einem der Ansprüche 1 bis 9, bei dem zusätzlich der Luftdruck (p) der Außenluft (A') ermittelt wird.

11. Temperaturregeleinrichtung (20) für von einem Luftzufuhrsystem (14) aus Außenluft (A') bereitgestellte Ansaugluft (A) mit einem Regler (22), an den eingangsseitig ein Meßsystem (28, 33) zur Ermittlung des Taupunktes (T_{T}) der Außenluft (A') angeschlossen ist, und der zur Einstellung der Temperatur (T_{A}) der Ansaugluft (A) mit einem Temperatur-Sollwert (T_{S}) beaufschlagt ist, der durch die Summe aus dem Taupunkt (T_{T}) der Außenluft (A') und aus einem additiven Sicherheitsaufschlag (S) gebildet ist.

12. Temperaturregeleinrichtung (20) nach Anspruch 11, wobei der Regler (22) bei einem Taupunkt (T_{T}) von mehr als 0°C mit einem Temperatur-Sollwert (T_{S}) beaufschlagt ist, der durch die Summe von 0°C und dem Sicherheitsaufschlag (S) gebildet ist.

13. Temperaturregeleinrichtung (20) nach Anspruch 11 oder 12, bei der der Sicherheitsaufschlag (S) mindestens 0°C und höchstens 0,5°C beträgt.

14. Temperaturregeleinrichtung (20) nach einem der Ansprüche 11 bis 13, an deren Meßsystem (28) eingangsseitig ein Temperaturfühler (31) zur Ermittlung der Temperatur (T) der Außenluft (A') und ein Feuchtigkeitsfühler (30) zur Ermittlung der relativen Feuchtigkeit (Fᵣ) der Außenluft (A') angeschlossen sind.

15. Temperaturregeleinrichtung (20) nach Anspruch 14, wobei der Regler (22) bei einer relativen Feuchtigkeit (Fᵣ) der Außenluft (A') von mindestens 80% mit dem Temperatur-Sollwert (T_{S}) beaufschlagt ist, und wobei der Regler (22) so ausgebildet ist, daß er bei einer relativen Feuchtigkeit (Fᵣ) der Außenluft (A') von weniger als 80 % keinen Regelungseingriff auf die Ansaugluft (A) vornimmt.

16. Temperaturregeleinrichtung (20) nach Anspruch 14, wobei der Regler (22) bei einer Temperatur (T) der Außenluft (A') von mindestens -5°C und von höchsten 5°C mit dem Temperatur-Sollwert (T_{S}) beaufschlagt ist, und wobei der Regler (22) so ausgebildet ist, daß er bei einer Temperatur (T) der Außenluft (A') von weniger als -5°C oder von mehr als 5°C keinen Regelungseingriff auf die Außenluft (A) vornimmt.

17. Temperaturregeleinrichtung (20) nach einem der Ansprüche 11 bis 13, an deren Meßsystem (28) eingangsseitig ein Feuchtigkeitsfühler (32) zur Ermittlung der absoluten Feuchtigkeit (Fₒ )der Außenluft (A') angeschlossen ist.

18. Temperaturregeleinrichtung (20) nach einem der Ansprüche 11 bis 17, in deren Meßsystem (28) ein Kennlinienfeld zur Bestimmung des Taupunktes (T_{T}) der Außenluft (A') hinterlegt ist.

19. Temperaturregeleinrichtung (20) nach einem der Ansprüche 11 bis 13, an deren Meßsystem (28) eingangsseitig ein Fühler (33) zur direkten Ermittlung des Taupunktes (T_{T}) der Außenluft (A') angeschlossen ist.

20. Temperaturregeleinrichtung (20) nach einem der Ansprüche 11 bis 19, an deren Meßsystem (28) eingangsseitig ein Druckfühler (36) zur Ermittlung des Luftdrucks (p) der Außenluft (A') angeschlossen ist.

21. Gasturbine (1) mit einem ihrer Brennkammer (10) vorgeschalteten Verdichter (8), für dessen Ansaugluft (A) eine Temperaturregeleinrichtung (20) nach einem der Ansprüche 11 bis 20 vorgesehen ist.

## Claims

1. Method of controlling the temperature of intake air (A) provided from outside air (A') via an air-feed system (14), in which method a temperature setpoint (T_{S}) formed by the sum of the dew point (T_{T}) of the outside air (A') and an additive margin of safety (S) is preselected for the intake air (A).

2. Method according to Claim 1, in which, in the event of the dew point (T_{T}) being more than 0°C, a temperature setpoint (T_{S}) formed by the sum of 0°C and the margin of safety (S) is preselected.

3. Method according to Claim 1 or 2, in which a margin of safety (S) of at least 0°C and at most 0.5°C is selected.

4. Method according to one of Claims 1 to 3, in which the dew point (T_{T}) is determined with the aid of the temperature (T) of the outside air (A') and with the aid of the relative humidity (Fᵣ) of the outside air (A').

5. Method according to Claim 4, in which the temperature setpoint (T_{S}) is preselected at a relative humidity (Fᵣ) of the outside air (A') of at least 80 %, and in which no control action is performed with respect to the intake air (A) at a relative humidity (Fᵣ) of the outside air (A') of less than 80%.

6. Method according to Claim 4, in which the temperature setpoint (T_{S}) is preselected at a temperature (T) of the outside air (A') of at least -5°C and at most 5°C, and in which no control action is performed with respect to the intake air (A) at a temperature (T) of the outside air (A') of less than -5°C or more than 5°C.

7. Method according to one of Claims 1 to 3, in which the dew point (T_{T}) is determined with the aid of the absolute humidity of the outside air (A').

8. Method according to one of Claims 1 to 7, in which the dew point (T_{T}) is determined with the aid of a characteristics field.

9. Method according to one of Claims 1 to 3, in which the dew point (T_{T}) of the outside air (A') is determined directly.

10. Method according to one of Claims 1 to 9, in which the air pressure (p) of the outside air (A') is additionally determined.

11. Temperature-control device (20) for intake air (A) provided from outside air (A') by an air-feed system (14), having a controller (22), to which a measuring system (28, 33) for determining the dew point (T_{T}) of the outside air (A') is connected on the input side and to which a temperature setpoint (T_{S}) is applied in order to set the temperature (T_{A}) of the intake air (A), which temperature setpoint (T_{S}) is formed from the sum of the dew point (T_{T}) of the outside air (A') and an additive margin of safety (S).

12. Temperature-control device (20) according to Claim 11, a temperature setpoint (T_{S}) being applied to the controller (22) at a dew point (T_{T}) of more than 0°C, which temperature setpoint (T_{S}) is formed by the sum of 0°C and the margin of safety (S).

13. Temperature-control device (20) according to Claim 11 or 12, in which the margin of safety (S) is at least 0°C and at most 0.5°C.

14. The temperature-control device (20) according to one of Claims 11 to 13, to the measuring system (28) of which a temperature sensor (31) for determining the temperature (T) of the outside air (A') and a humidity sensor (30) for determining the relative humidity (Fᵣ) of the outside air (A') are connected on the input side.

15. Temperature-control device (20) according to Claim 14, the temperature setpoint (T_{S}) being applied to the controller (22) at a relative humidity (Fᵣ) of the outside air (A') of at least 80%, and the controller (22) being designed in such a way that it performs no control action with respect to the intake air (A) at a relative humidity (Fᵣ) of the outside air (A') of less than 80%.

16. Temperature-control device (20) according to Claim 14, the temperature setpoint (T_{S}) being applied to the controller (22) at a temperature (T) of the outside air (A') of at least -5°C and at most 5°C, and the controller (22) being designed in such a way that it performs no control action with respect to the intake air (A) at a temperature (T) of the outside air (A') of less than -5°C or more than 5°C.

17. Temperature-control device (20) according to one of Claims 11 to 13, to the measuring system (28) of which a humidity sensor (32) for determining the absolute humidity (Fₒ) of the outside air (A') is connected on the input side.

18. Temperature-control device (20) according to one of Claims 11 to 17, in the measuring system (28) of which a characteristics field for determining the dew point (T_{T}) of the outside air (A') is stored.

19. Temperature-control device (20) according to one of Claims 11 to 13, to the measuring system (28) of which a sensor (33) for directly determining the dew point (T_{T}) of the outside air (A') is connected on the input side.

20. Temperature-control device (20) according to one of Claims 11 to 19, to the measuring system (28) of which a pressure sensor (36) for determining the air pressure (p) of the outside air (A') is connected on the input side.

21. Gas turbine (1) having a compressor (8) which is connected upstream of its combustion chamber (10) and for the intake air (A) of which a temperature-control device (20) according to one of Claims 11 to 20 is provided.

## Revendications

1. Procédé de régulation de la température d'air (A) aspiré mis à disposition à partir d'air (A') extérieur par l'intermédiaire d'un système (14) d'apport d'air qui consisté à prescrire pour l'air (A) aspiré une valeur (T_{S}) de consigne de la température formée de la somme du point (T_{T}) de rosée de l'air (A') extérieur et d'une marge (S) additive de sécurité.

2. Procédé suivant la revendication 1, dans lequel dans le cas où le point (T_{T}) de rosée est supérieur à 0°C, on prescrit une valeur (T_{S}) de consigne de la température formée de la somme de 0°C et de la marge (S) de sécurité.

3. Procédé suivant la revendication 1 ou 2, dans lequel on choisit une marge (S) de sécurité d'au moins 0°C et d'au plus 0,5°C.

4. Procédé suivant l'une des revendications 1 à 3, dans lequel on détermine le point (T_{T}) de rosée au moyen de la température (T) de l'air (A') extérieur et au moyen de l'humidité (Fᵣ) relative de l'air (A') extérieur.

5. Procédé suivant la revendication 4, dans lequel on prescrit une humidité (Fᵣ) relative de l'air (A') extérieur d'au moins 80 % de la valeur (T_{S}) de consigne de la température et dans lequel on n'effectue pas pour une humidité (Fᵣ) relative de l'air (A') extérieur inférieure à 80 % d'intervention de régulation sur l'air (A) aspiré.

6. Procédé suivant la revendication 4 dans lequel, pour une température (T) de l'air (A') extérieur d'au moins -5°C et d'au plus 5°C, on prescrit une valeur (T_{S}) de consigne de la température, et dans lequel, pour une température (T) de l'air (A') extérieur inférieure à -5°C ou supérieure à 5°C, on n'effectue pas d'intervention de régulation sur l'air (A) aspiré.

7. Procédé suivant l'une des revendications 1 à 3, dans lequel on détermine le point (T_{T}) de rosée au moyen de l'humidité absolue de l'air (A') extérieur.

8. Procédé suivant l'une des revendications 1 à 7, dans lequel on détermine le point (T_{T}) de rosée au moyen d'un champ de courbés caractéristiques.

9. Procédé suivant l'une des revendication 1 à 3, dans lequel on détermine directement le point (T_{T}) de rosée de l'air (A') extérieur.

10. Procédé suivant l'une des revendications 1 à 9, dans lequel on détermine en plus la pression (p) de l'air (A') extérieur.

11. Dispositif (20) de régulation de la température pour de l'air (A) aspiré mis à disposition par un système (14) d'apport d'air à partir de l'air (A') extérieur comprenant un régulateur (22) auquel est raccordé, du côté de l'entrée, un système (28, 33) de mesure de détermination du point (T_{T}) de rosée de l'air (A') extérieur et auquel est envoyée, pour régler la température (T_{A}) de l'air (A) aspiré, une valeur (T_{S}) de consigne de la température, qui est formée de la somme du point (T_{T}) de rosée de l'air (A') extérieur et d'une marge (S) additive de sécurité.

12. Dispositif (20) de régulation de la température suivant la revendication 11, dans lequel il est envoyé au régulateur (22) pour un point (T_{T}) de rosée supérieur à 0°C, une valeur (T_{S}) de consigne de la température qui est formée de la somme de 0°C et de la marge (S) de sécurité.

13. Dispositif (20) de régulation de la température suivant la revendication 11 ou 12, dans lequel on choisit une marge (S) de sécurité d'au moins 0°C et d'au plus 0,5°C.

14. Dispositif (20) de régulation de la température suivant l'une des revendications 11 à 13, au système (28) de mesure duquel sont raccordée du côté de l'entrée une sonde (31) de température destinée à déterminer la température (T) de l'air (A') extérieur et une sonde (30) d'humidité destinée à déterminer l'humidité (Fᵣ) relative de l'air (A') extérieur.

15. Dispositif (20) de régulation de la température suivant la revendication 14, dans lequel il est envoyé au régulateur (22), pour une humidité (Fᵣ) relative de l'air (A') extérieur d'au moins 80 %, la valeur (T_{S}) de consigne de la température et le régulateur (22) est constitué de façon à ce qu'il n'effectue pas pour une humidité (Fᵣ) relative de l'air (A') extérieur inférieure à 80 % d'intervention de régulation sur l'air (A) aspiré.

16. Dispositif (20) de régulation de la température suivant la revendication 14, dans lequel il est envoyé au régulateur (22), pour une température (T) de l'air (A') extérieur d'au moins -5°C et d'au plus 5°C, la valeur (T_{S}) de consigne de la température et le régulateur (22) est constitué de façon à ce qu'il n'effectue pas pour une température (T) de l'air (A') extérieur inférieure à -5°C ou supérieure à 5°C d'intervention de régulation sur l'air (A) aspiré.

17. Dispositif (20) de régulation de la température suivant l'une des revendications 11 à 13, au système (28) de mesure duquel est raccordée du côté de l'entrée une sonde (32) d'humidité destinée à déterminer l'humidité (Fₒ) absolue de l'air (A') extérieur.

18. Dispositif (20) de régulation de la température suivant l'une des revendications 11 à 17, dans le système (28) de mesure duquel est enregistrée une famille de courbes caractéristiques destinée à déterminer le point (T_{T}) de rosée de l'air (A') extérieur.

19. Dispositif (20) de régulation de la température suivant l'une des revendications 11 à 13, au système (28) de mesure duquel est raccordée du côté de l'entrée une sonde (33) destinée à déterminer directement le point (T_{T}) de rosée de l'air (A') extérieur.

20. Dispositif (20) de régulation de la température suivant l'une des revendication 11 à 19, au système (28) de mesure duquel est raccordée du côté de l'entrée une sonde (36) de pression destinée à déterminer la pression (p) de l'air (A') extérieur.

21. Turbine (1) à gaz comprenant un compresseur (8) qui est monté en amont de sa chambre (10) de combustion et pour l'air (A) aspiré duquel il est prévu un dispositif (20) de régulation de la température suivant. l'une des revendications 11 à 20.
